(19) Europäisches Patentamt
European Patent Office
Office européen des brevets

(11) Veröffentlichungsnummer: **0 641 837 A1**

# (12) EUROPÄISCHE PATENTANMELDUNG

(21) Anmeldenummer: **94112792.0**

(51) Int. Cl.[6]: **C09B 29/42**, D06P 3/54

(22) Anmeldetag: **17.08.94**

(30) Priorität: **03.09.93 DE 4329762**

(43) Veröffentlichungstag der Anmeldung: **08.03.95 Patentblatt 95/10**

(84) Benannte Vertragsstaaten: **DE ES FR GB IT**

(71) Anmelder: **HOECHST MITSUBISHI KASEI CO., LTD.**
**10-33, Akasaka 4-chome**
**Minato-ku,**
**Tokyo (JP)**

(72) Erfinder: **Himeno, Kiyoshi**
**23-4, 9-chome Hinosato**
**Munakata-shi,**
**Fukuoka (JP)**
Erfinder: **Bühler, Ulrich, Dr.**
**Kastanienweg 8**
**D-63755 Alzenau (DE)**
Erfinder: **Zerrer, Ralf, Dr.**
**Taunusring 72**
**D-63755 Alzenau (DE)**

(74) Vertreter: **Muley, Ralf, Dr.**
**Cassella AG,**
**Patentabteilung,**
**Hanauer Landstrasse 526**
**D-60386 Frankfurt (DE)**

## (54) Verfahren zum Färben von Polyester und polyesterhaltigen Textilmaterialien.

(57) Die Erfindung betrifft ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I

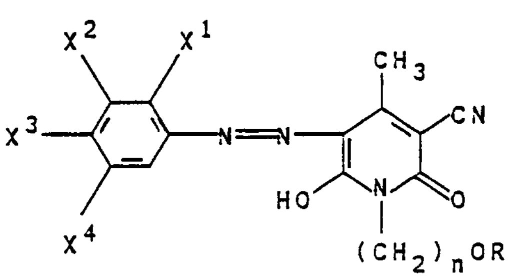

(I)

einsetzt, worin $X^1$ bis $X^4$, n und R wie in Anspruch 1 angegeben definiert sind.

EP 0 641 837 A1

Die vorliegende Erfindung betrifft ein Verfahren zum Färben von textilem Polyester oder polyesterhaltigen Textilmaterialien mit Hydroxypyridon-Azofarbstoffen.

In der Regel werden textiles Polyester oder polyesterhaltige Textilmaterialien mit Dispersionsfarbstoffen aus wäßrigem Färbebad bei HT-Bedingungen in einem Temperaturbereich von 120 bis 140 °C bei pH-Werten von 4 bis 6 gefärbt, da bei höheren pH-Werten die Dispersionsfarbstoffe teilweise oder ganz zerstört werden. Bei höheren pH-Werten kommt es somit zu Farbstärkeverlusten und Farbtonabweichungen beim Färben und die Färbungen sind nicht reproduzierbar. Nun wird normalerweise die Polyesterfaser in einem separaten Schritt vor dem Farben einer alkalischen Spülbehandlung unterworfen, um Hilfsmittel, die beim Weben oder Spinnen der Faser eingesetzt worden sind, zu entfernen. Diese Hilfsmittel sind z.B. Ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinneren herausgetreten sind und die Färbung unegal erscheinen lassen, zu zerstören und in der wäßrigen Färbeflotte zu halten. Die genannten Oligomere sind insbesondere beim Garnfärben unerwünscht, da sie sich beim Spinnen der gefärbten Garne in den Spinnapparaten an den Stellen, wo das Garn umgelenkt wird, durch Abrieb pulverartig absetzen. Sie verschmutzen so die Apparatur und führen dazu, daß das Garn reißt.

Diese alkalische Spülbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispersions- bzw. Reaktivfarbstoffen aus wäßrigem Färbebad in der Regel in zwei Färbeschritten gefärbt. Wie oben erwähnt, werden dabei die Dispersionsfarbstoffe auf dem Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, die bereits bei pH-Werten zwischen 8 und 11 gefärbt werden können, und es waren auch hier Verfahren erforderlich, die sicherstellen, daß unter diesen Bedingungen der Polyesteranteil mit Dispersionsfarbstoffen reproduzierbar gefärbt werden kann.

Zur Behandlung der Mängel bisheriger Verfahren wird in der DE-A 39 38 631 eine Methode beschrieben, bei der Dispersionsfarbstoffe im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure gefärbt werden. Allerdings führt dieses Verfahren bei der Herstellung von gelben Färbungen mit den derzeit auf dem Markt befindlichen Hydroxypyridon-Azofarbstoffen nicht zu befriedigenden Ergebnissen, sondern zu Einbußen an Farbstärke und Brillanz. Die genannten Hydroxypyridon-Azofarbstoffe, insbesondere auch der in EP-A 74 562 beschriebene, sind nämlich aufgrund ihrer acidifizierten Hydroxygruppen zu alkaliempfindlich. Dies zeigt sich auch schon daran, daß diverse Hydroxypyridon-Azofarbstoffe als für den alkalischen Ätzdrück gut geeignet empfohlen werden. Beim alkalischen Ätzdruck wird der Farbstoff an den Stellen, wo er auf das zu bedruckende Gewebe aufgebracht und vor dem Fixieren mit Alkali in Berührung gebracht wird, zerstört und kann an dieser Stelle das Gewebe nicht einfärben.

Aus der JP-Hei-2-14379 sind zwar bereits Farbstoffe mit deutlich verbesserter Alkalistabilität bekannt. Sie zeigen jedoch gravierende Nachteile bezüglich ihres färberischen Verhaltens und ihrer Gebrauchsechtheiten wie Naßechtheit, Lösungsmittelechtheit und insbesondere Thermofixierechtheit.

Aufgabe der vorliegenden Erfindung ist es deshalb, alkalistabile Farbstoffe bereitzustellen, die Gelbfärbungen in guter Qualität reproduzierbar und ohne unökonomischen Mehreinsatz von Farbstoff bzw. unökologisch höhere Belastung des Färbereiabwassers durch hydrolysierte Farbstoffe liefern und das erforderliche Niveau in den Gebrauchsechtheiten erreichen.

Es wurde nun überraschenderweise gefunden, daß ausgewählte Hydroxypyridon-Azofarbstoffe diese Aufgabe lösen. Diese Hydroxypyridon-Azofarbstoffe sind teilweise bereits aus der DE-A 19 32 806, BE-A 727 081 und EP-B 247 737 bekannt, allerdings ohne daß ihre besondere Eignung für die Alkalifärberei bekannt oder naheliegend gewesen wäre.

Die Erfindung betrifft somit ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I

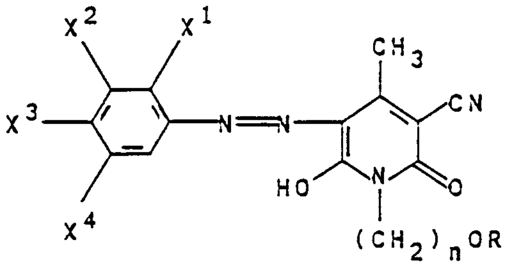

(I)

einsetzt, worin
R $(C_1-C_6)$-Alkyl;
n 2,3 oder 4 und
einer oder zwei der Reste $X^1$ bis $X^4$ Halogen und die anderen Wasserstoff bedeuten.

Für R stehendes $(C_1-C_6)$-Alkyl kann geradkettig oder verzweigt sein und bedeutet beispielsweise Methyl, Ethyl, n-Propyl, i-Propyl, n-Butyl, i-Butyl, sek. Butyl, n-Pentyl, i-Pentyl, n-Hexyl oder i-Hexyl. Bevorzugt bedeutet R $(C_3-C_6)$-Alkyl und besonders bevorzugt $(C_4-C_6)$-Alkyl.

n bedeutet bevorzugt 4 und besonders bevorzugt 3. Bevorzugte Farbstoffe der allgemeinen Formel I sind solche, in denen die Summe aus n und der Anzahl der Kohlenstoffatome des Restes R 6, 7 oder 8 beträgt. Halogen bedeutet bevorzugt Fluor und Brom, besonders bevorzugt Chlor.

Bevorzugte Farbstoffe der allgemeinen Formel I sind solche, in denen zwei der Reste $X^1$ bis $X^4$ Chlor und die übrigen Wasserstoff bedeuten. Besonders bevorzugt ist es, wenn $X^1$ und $X^3$ oder $X^2$ und $X^3$ Chlor bedeuten.

Besonders bevorzugt werden Farbstoffe der allgemeinen Formel I eingesetzt, die mehrere der obengenannten bevorzugten Merkmale aufweisen.

Die vorliegende Erfindung betrifft auch Monoazofarbstoffe der allgemeinen Formel I, worin
R $(C_5-C_6)$-Alkyl;
n 2, 3 oder 4 und
einer oder zwei der Reste $X^1$ bis $X^4$ Halogen und die anderen Wasserstoff bedeuten.

Bevorzugte Farbstoffe sind solche, die die bereits oben im Rahmen der Beschreibung des erfindungsgemäßen Verfahrens als bevorzugt bezeichnete Merkmale aufweisen.

Die erfindungsgemäßen Farbstoffe der allgemeinen Formel I waren bisher noch nicht bekannt und sind den strukturell nächstliegenden Verbindungen des Standes der Technik hinsichtlich ihrer färberischen Eigenschaften überlegen.

Die Farbstoffe der allgemeinen Formel I können analog den in obengenanntem Stand der Technik beschriebenem Verfahren hergestellt werden. Insbesondere können sie dadurch hergestellt werden, daß eil Amin der allgemeinen Formel II

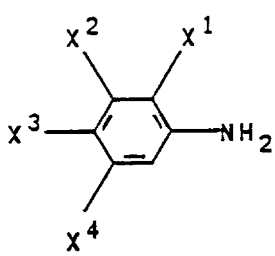

(II)

worin $X^1$ bis $X^4$ wie oben angegeben definiert sind in an sich bekannter Weise diazotiert und auf ein Hydroxypyridon der allgemeinen Formel III

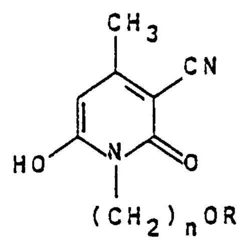

(III)

worin n und R wie oben angegeben definiert sind, gekuppelt wird.

Das erfindungsgemäße Verfahren kann mit einem Farbstoff der allgemeinen Formel I ausgeführt werden. Es kann aber auch mit zwei oder mehreren Farbstoffen der allgemeinen Formel I ausgeführt werden, wobei zwei Farbstoffe bevorzugt sind. Der Ansteil eines Farbstoffs in diesen Fällen beträgt bevorzugt 5 bis 80 Gew.%, besonders bevorzugt 20 bis 40 Gew.%, jeweils bezogen auf die Gesamtfarbstoffmenge.

Das erfindungsgemäße Verfahren wird bevorzugt unter HT-Bedingungen ausgeführt, d.h. in wäßriger Färbeflotte bei Temperaturen zwischen 120 ° C und 140 ° C in einem Färbeautoklaven.

Der pH-Wert liegt bevorzugt bei pH 9 bis pH 10.

Die erfindungsgemäßen Farbstoffe der allgemeinen Formel I können ebenso wie die in der EP-B 247 737 in Verbindung mit dem Thermosublimationsdruck genannten Farbstoffe, die unter die allgemeine Formel I fallen, nicht nur im erfindungsgemäßen Verfahren, sondern auch in anderen üblichen Färbe- und Druckverfahren verwendet werden.

Die vorliegende Erfindung betrifft deshalb auch die Verwendung von Monoazofarbstoffen der allgemeinen Formel I, worin R ($C_2$-$C_6$)-Alkyl;
n 2, 3 oder 4 und
einer oder zwei der Reste $x^1$ bis $X^4$ Halogen und die anderen Wasserstoff bedeuten, zum Färben und Bedrucken von hydrophoben synthetischen Textilmaterialien, wobei der Thermosublimationsdruck für R gleich ($C_2$-$C_4$)-Alkyl ausgeschlossen ist. Beispiele für solche Verfahren sind insbesondere das Färben unter HT-Bedingungen im pH-Bereich zwischen 4 und 11.

Die nach dem erfindungsgemäßen Verfahren zu färbenden Polyester sind insbesondere solche auf Basis von Polyethylenglykolterephthalaten. Polyesterhaltige Textilmaterialien sind Mischungen aus Polyester und Polyamiden und insbesondere Polyester/Cellulose-Mischgewebe.

Bei dem erfindungsgemäßen Verfahren werden die Farbstoffe oder Farbstoffmischungen in feiner Verteilung eingesetzt. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Väkuumtrocknung, Gefriertrocknung, durch Trocknung auf Walzentrocknern, vorzugsweise aber auch durch Sprühtrocknung.

Zur Herstellung der Färbeflotten werden die erforderlichen Mengen der Farbstoffeinstellungen, die gemäß den obigen Angaren hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/Natriumpyrophosphat, Borsäure/Borax, Natriumdihydrogenphosphat/Dinatriumhydrogenphosphat, Phosphorsäure/Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

Beispiel 1

1,5 g einer 20 %igen Pulverpräparation des Farbstoffs der Formel Ia

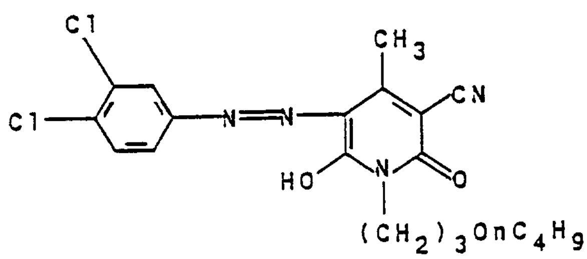

(Ia)

werden in einem Färbeautoklaven aus einer Färbeflotte bestehend aus 2 l Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130 °C auf 100 g eines Gewebes aus Polyethylentherephthalat gefärbt, nachdem vorher der pH-Wert der Färbeflortte mit wäßriger Natronlauge auf 9,5 gestellt wurde. Danach wird die Färbung gespült, reduktiv gereinigt, sowie gespült und getrocknet. Man erhält so eine gelbe Färbung mit klarem Farbton.

Vergleichsversuch 1:

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist nahezu farbstärke- und farbtongleich, der Farbstoff hat sich somit bei pH 9,5 praktisch nicht zersetzt.

Vergleichsversuch 2:

Die oben beschriebenen Färbungen bei pH 9,5 und 4,5 werden wiederholt, wobei aber anstelle des Farbstoffs der Formel Ia der aus der EP-A 74 562 bekannte Farbstoff der Formel IV

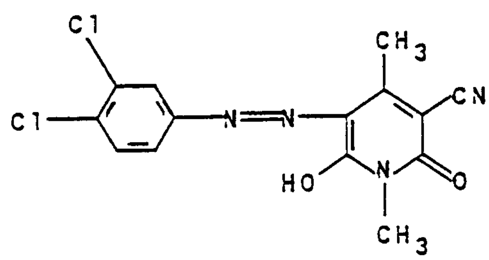

(IV)

eingesetzt wird. Man erhält bei pH 9,5 eine Färbung, deren Farbtiefe nur ca. 75 % der Farbtiefe beträgt, die bei pH 4,5 erzielt wird.

Beispiel 2

15 g des Farbstoffs der Formel Ib

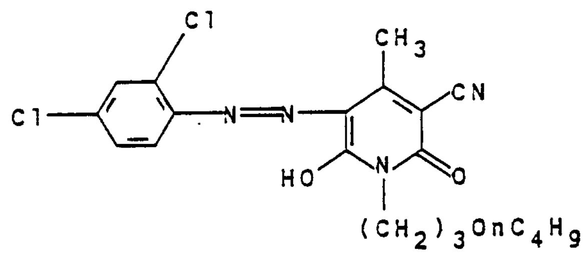

(Ib)

werden in feiner Verteilung einer Druckpaste, die 45 g Johannisbrotkernmehl, 6 g 3-Nitrobenzolsaures Natrium und 3 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, gespült und getrocknet, so erhält man einen farbstarken gelben Druck mit hervoragenden Echtheiten.

Die nachfolgende Tabelle 1 nennt erfindungsgemäße Farbstoffe der allgemeinen Formel I, die entsprechend den vorstehenden Beispielen 1 und 2 verwendet werden können:

Tabelle 1:

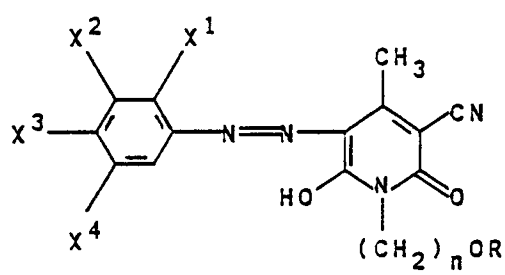

(I)

| Beispiel | $X^1$ | $X^2$ | $X^3$ | $X^4$ | n | R |
|---|---|---|---|---|---|---|
| 3 | Cl | H | Cl | H | 3 | $n\text{-}C_5H_{11}$ |
| 4 | Cl | H | Cl | H | 4 | $i\text{-}C_6H_{13}$ |
| 5 | Cl | H | Cl | H | 4 | $n\text{-}C_6H_{13}$ |
| 6 | H | Cl | Cl | H | 4 | $n\text{-}C_5H_{11}$ |

Die nachfolgende Tabelle 2 nennt weitere Farbstoffe der allgemeinen Formel I, die analog Beispiel 1 für das erfindungsgemäße Verfahren verwendet werden können:

Tabelle 2:

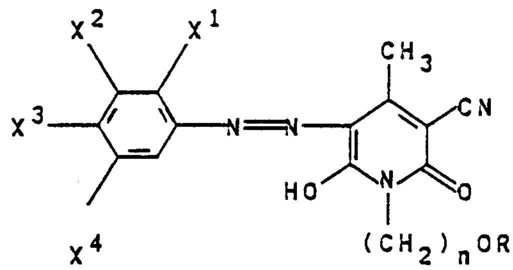

(I)

| Beispiel | $X^1$ | $X^2$ | $X^3$ | $X^4$ | n | R |
|---|---|---|---|---|---|---|
| 7 | H | Cl | Cl | H | 3 | $CH_3$ |
| 8 | Cl | H | Cl | H | 3 | $CH_3$ |
| 9 | Cl | H | Cl | H | 2 | $nC_4H_9$ |
| 10 | H | Cl | Cl | H | 4 | $CH_3$ |
| 11 | H | H | Cl | H | 3 | $C_2H_5$ |
| 12 | H | Cl | H | H | 3 | $iC_3H_7$ |
| 13 | Cl | H | H | Cl | 2 | $nC_3H_7$ |
| 14 | H | Cl | Cl | H | 3 | $iC_3H_7$ |
| 15 | H | Cl | Cl | H | 3 | $nC_5H_{11}$ |
| 16 | H | Cl | Cl | H | 3 | $iC_5H_{11}$ |
| 17 | H | Cl | Cl | H | 2 | $nC_6H_{13}$ |
| 18 | H | Cl | Cl | H | 4 | $C_2H_5$ |
| 19 | H | Cl | Cl | H | 4 | $nC_4H_9$ |
| 20 | Cl | H | Cl | H | 2 | $iC_6H_{13}$ |
| 21 | Cl | H | Cl | H | 3 | $nC_3H_7$ |
| 22 | Cl | H | Cl | H | 3 | $nC_4H_9$ |
| 23 | Cl | H | Cl | H | 3 | $nC_6H_{13}$ |
| 24 | Cl | H | Cl | H | 4 | $C_2H_5$ |
| 25 | Cl | H | Cl | H | 4 | $nC_4H_9$ |
| 26 | Cl | H | H | Cl | 3 | $iC_3H_7$ |

| Beispiel | $X^1$ | $X^2$ | $X^3$ | $X^4$ | n | R |
|---|---|---|---|---|---|---|
| 27 | Cl | H | H | Cl | 3 | $nC_4H_9$ |
| 28 | Cl | H | H | Cl | 4 | $CH_3$ |
| 29 | Cl | H | H | Cl | 4 | $iC_3H_7$ |
| 30 | H | H | Cl | H | 3 | $nC_4H_9$ |
| 31 | H | H | Cl | H | 3 | $nC_6H_{13}$ |
| 32 | H | H | Cl | H | 4 | $iC_3H_7$ |
| 33 | H | H | Cl | H | 4 | $nC_4H_9$ |
| 34 | H | Cl | H | H | 2 | $nC_6H_{13}$ |
| 35 | H | Cl | H | H | 3 | $nC_4H_9$ |
| 36 | H | Cl | H | H | 4 | $CH_3$ |
| 37 | Cl | H | H | H | 3 | $nC_4H_9$ |
| 38 | H | H | Br | H | 3 | $nC_3H_7$ |
| 39 | H | Br | H | H | 4 | $C_2H_5$ |
| 40 | H | Br | Br | H | 2 | $nC_4H_9$ |
| 41 | H | F | H | H | 4 | $iC_3H_7$ |
| 42 | H | H | F | H | 3 | $iC_4H_9$ |
| 43 | F | H | F | H | 3 | $nC_4H_9$ |
| 44 | H | Cl | F | H | 4 | $C_2H_5$ |
| 45 | F | H | Cl | H | 3 | $iC_6H_{13}$ |
| 46 | H | Cl | Br | H | 3 | $iC_4H_9$ |

Die nachfolgende Tabelle 3 nennt weitere Farbstoffe der allgemeinen Formel I, die analog den vorstehenden Beispielen 1 und 2 verwendet werden können:

Tabelle 3:

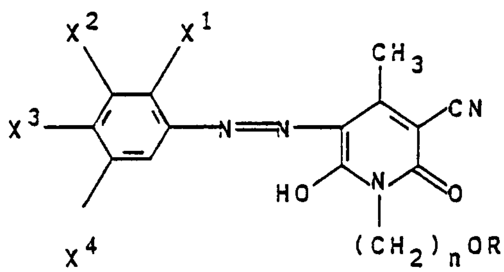

(I)

| Beispiel | $X^1$ | $X^2$ | $X^3$ | $X^4$ | n | R |
|---|---|---|---|---|---|---|
| 47 | Cl | H | Cl | H | 3 | $iC_3H_7$ |
| 48 | Cl | H | Cl | H | 4 | $nC_3H_7$ |
| 49 | H | Cl | Cl | H | 3 | $nC_3H_7$ |
| 50 | H | Cl | Cl | H | 3 | $iC_4H_9$ |
| 51 | H | Cl | Cl | H | 4 | $nC_3H_7$ |
| 52 | H | Cl | Cl | H | 4 | $iC_4H_9$ |

## Patentansprüche

**1.** Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I

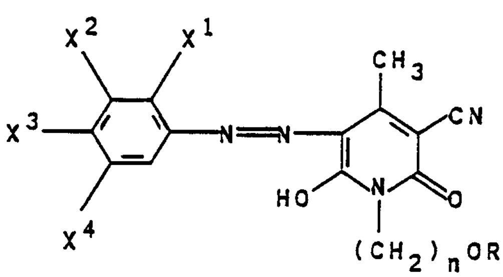

(I)

einsetzt, worin
R $(C_1\text{-}C_6)$-Alkyl;
n 2,3 oder 4 und
einer oder zwei der Reste $X^1$ bis $X^4$ Halogen und die anderen Wasserstoff bedeuten.

**2.** Verfahren gemäß Anspruch 1, dadurch gekennzeichnet, daß R $(C_4\text{-}C_6)$-Alkyl bedeutet.

**3.** Verfahren gemäß Anspruch 1 und/oder 2, dadurch gekennzeichnet, daß n 3 bedeutet.

**4.** Verfahren gemäß einem oder mehreren der Ansprüche 1 bis 3, dadurch gekennzeichnet, daß die Summe aus n und der Anzahl der Kohlenstoffatome des Restes R 6, 7 oder 8 beträgt.

5. Verfahren gemäß einem oder mehreren der Ansprüche 1 bis 4, dadurch gekennzeichnet, daß Halogen Chlor ist.

6. Verfahren gemäß einem oder mehreren der Ansprüche 1 bis 5, dadurch gekennzeichnet, daß $X^1$ und $X^3$ oder $X^2$ und $X^3$ Chlor bedeuten.

7. Verfahren gemäß einem oder mehreren der Ansprüche 1 bis 6, dadurch gekennzeichnet, daß es unter HT-Bedingungen in wäßriger Färbeflotte bei Temperaturen zwischen 120 °C und 140 °C in einem Färbeautoklaven ausgeführt wird.

8. Monoazofarbstoffe der allgemeinen Formel I gemäß Anspruch 1, worin R ($C_5$-$C_6$)-Alkyl; n 2, 3 oder 4 und einer oder zwei der Reste $X^1$ bis $X^4$ Halogen und die anderen Wasserstoff bedeuten.

9. Verfahren zur Herstellung von Monoazofarbstoffen der allgemeinen Formel I gemäß Anspruch 8, dadurch gekennzeichnet, daß ein Amin der allgemeinen Formel II

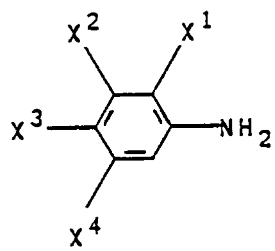

(II)

worin $X^1$ bis $X^4$ wie in Anspruch 1 angegeben definiert sind, in an sich bekannter Weise diazotiert und auf ein Hydroxypyridon der allgemeinen Formel III

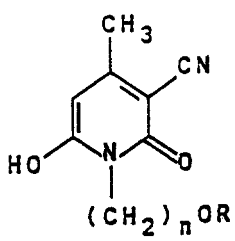

(III)

worin n und R wie in Anspruch 1 angegeben definiert sind, gekuppelt wird.

10. Verwendung von Monoazofarbstoffen der allgemeinen Formel I, worin R ($C_2$-$C_6$)-Alkyl; n 2, 3 oder 4 und einer oder zwei der Reste $X^1$ bis $X^4$ Halogen und die anderen Wasserstoff bedeuten, zum Färben und Bedrucken von hydrophoben synthetischen Textilmaterialien, wobei der Thermosublimationsdruck für R gleich ($C_2$-$C_4$)-Alkyl ausgeschlossen ist.

Europäisches Patentamt

# EUROPÄISCHER RECHERCHENBERICHT

Nummer der Anmeldung
EP 94 11 2792

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | JP-A-55 036 350 (NIPPON KAYAKU CO., LTD.)<br>* Seite 5, Verbindung 17 *<br>& CHEMICAL ABSTRACTS, vol. 93, no. 10, 8. September 1980, Columbus, Ohio, US; abstract no. 96782a, Seite 81 ;<br>* Zusammenfassung *<br>--- | 8-10 | C09B29/42<br>D06P3/54 |
| A | EP-A-0 268 897 (BASF.AG)<br>* Beispiele 1-14, 17-25, 27-36 *<br>* Anspruch 1 *<br>--- | 1-10 | |
| A | DE-A-29 51 403 (BASF AG.)<br>* Beispiele 8,9,17 *<br>--- | 1-10 | |
| A | DE-A-19 66 335 (IMPERIAL CHEMICAL INDUSTRIES LTD.)<br>* Seite 7, Absatz 2 - Seite 8, Absatz 3; Beispiele 27,77 *<br>--- | 1-10 | |
| A,D | EP-A-0 074 562 (BAYER AG.)<br>* Seite 1, Zeile 7 - Zeile 13; Ansprüche *<br>----- | 1-10 | RECHERCHIERTE SACHGEBIETE (Int.Cl.6)<br>C09B |

Der vorliegende Recherchenbericht wurde für alle Patentansprüche erstellt

| Recherchenort | Abschlußdatum der Recherche | Prüfer |
|---|---|---|
| DEN HAAG | 28. November 1994 | Ginoux, C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)